# EUROPEAN PATENT APPLICATION

(11) **EP 3 197 074 A1**
(43) Date of publication of application: **26.07.2017**
(21) Application number: 14884795.7
(22) Date of filing: 22.12.2014
(51) Int. Cl.: H04B 10/07, H04L 12/44

(54) **METHOD AND DEVICE FOR DETECTING LOOPBACK LINK, OPTICAL LINE TERMINAL, AND OPTICAL NETWORK TERMINAL**

(30) Priority: 17.09.2014 CN 201410476435
(71) Applicant: ZTE Corporation, Shenzhen, Guangdong 518057 (CN)
(72) Inventor: YE, Mao, Shenzhen Guangdong 518057 (CN); ZHANG, Xiaoou, Shenzhen Guangdong 518057 (CN)
(74) Representative: Brevalex
(86) International application number: PCT/CN2014/094546
(87) International publication number: WO 2015/131623

(57) **Abstract**

A method and device for detecting a loopback link, as well as an Optical Line Terminal (OLT) and an Optical Network Terminal (ONT) are intended to solve the problem of the inability to precisely determine the ONT on which a loopback link occurs, which may result in excessive interruption for user service. The method includes that an OLT sends a loopback detection instruction to an ONT, acquires a loopback detection message returned by the ONT according to the loopback detection instruction, the loopback detection message including a position of a source ONT issuing the loopback detection message and source port information, as well as a position of a destination ONT receiving the loopback detection message and destination port information, and determines the ONT experiencing a loopback link according to the position of the source ONT and the source port information, as well as the position of the destination ONT and the destination port information. By means of the cooperation between the OLT and the ONT, the above technical solution precisely detects an ONT port on which a loopback link occurs, and closes a service corresponding to Virtual Local Area Network (VLAN) information in the ONT ports according to the priorities of the ONTs and the ONT ports, thereby avoiding excessive interruption for user service and improving user experience.

## Description

### TECHNICAL FIELD

The disclosure relates to detection of a loopback link, and more particularly to a method and device for detecting a loopback link, as well as an Optical Line Terminal (OLT) and an Optical Network Terminal (ONT).

### BACKGROUND

As an apparatus access to the current high-speed broadband, a Gigabit Passive Optical Network (GPON) access system apparatus has a variety of usage scenarios from Fiber To The Building (FTTB) and Fiber To The Home (FTTH). The GPON apparatus has actually evolved into a convergence layer. Compared with the previous generation apparatus, a single apparatus impacts more users. Therefore, the GPON apparatus can maintain and keep business stability, which is an important manifestation of its performance. The user environment is converged to the OLT in the GPON after being accessed through the ONT. As the device terminal in the GPON, the ONT can carry voice, broadband and other services. Each service has different priorities for the user. In the FTTB scenario, a single ONT is also accessed by multiple users.

At present, there is no defined standard for loopback detection in terms of the manner and method. The main manner is to report the message detection and acquire the manual intervention, which directly interrupts the whole services of the ONT in which a loopback occurs. Actually, the users require a method for precise loopback detection while reducing the interruption of the user service as much as possible.

### SUMMARY

The disclosure is intended to provide a method and device for detecting a loopback link, as well as an OLT and an ONT, for solving the problem of the inability to precisely determine the ONT on which a loopback link occurs, which results in excessive interruption of a user service.

To this end, the following technical solutions are adopted.

Provided is a method for an OLT detecting a loopback link, applied to a passive optical access system including an OLT and a plurality of ONTs connected to the OLT. The method includes that the OLT sends a loopback detection instruction to an ONT requiring to be detected. The OLT acquires a loopback detection message returned by the ONT according to the loopback detection instruction, wherein the loopback detection message includes the position of an ONT issuing the loopback detection message, that is, a source ONT, and port information of a port issuing the loopback detection message, as well as the position of an ONT receiving the loopback detection message, that is, a destination ONT, and port information of a port receiving the loopback detection message. The OLT determines the ONT on which a loopback link occurs according to the position of the source ONT and the source port information, as well as the position of the destination ONT and the port information of the port receiving the loopback detection message.

Optionally, the loopback detection message further includes: Virtual Local Area Network (VLAN) information for identifying a service type of an ONT port.

Optionally, after the step of determining the ONT on which a loopback link occurs according to the position of the source ONT and the port information of the port issuing the loopback detection message, as well as the position of the destination ONT and the port information of the port receiving the loopback detection message, the method further includes that the OLT closes a service corresponding to the VLAN information in the source ONT or the destination ONT of the loopback link.

Optionally, the step of the OLT determining the ONT on which a loopback link occurs according to the position of the source ONT and the port information of the port issuing the loopback detection message, as well as the position of the destination ONT and the port information of the port receiving the loopback detection message includes: determining that the loopback link occurs on the source ONT or the destination ONT when the position of the source ONT coincides with the position of the destination ONT and the port issuing the loopback detection message fails to coincide with the port receiving the loopback detection message.

Optionally, the step of the OLT closing the service corresponding to the VLAN information in the source ONT or the destination ONT of the loopback link includes: selecting an ONT port with a lower priority in the source port and the destination port according to preset priorities of ONT ports and closing the service corresponding to the VLAN information in the ONT port with a lower priority.

Optionally, prior to the step of the OLT sending a loopback detection instruction to the plurality of ONTs, the method further includes setting priorities of the services of ports of the plurality of ONTs.

Optionally, the step of the OLT determining the ONT on which a loopback link occurs according to the position of the source ONT and the port information of the port issuing the loopback detection message, as well as the position of the destination ONT and the port information of the port receiving the loopback detection message includes: determining that the loopback link occurs on the source port of the source ONT when the position of the source ONT coincides with the position of the destination ONT and the port issuing the loopback detection message coincides with the port receiving the loopback detection message.

Optionally, the step of the OLT closing the service corresponding to the VLAN information in the source ONT or the destination ONT of the loopback link includes: closing a service with a lower priority in the source port, wherein the service is a service corresponding to the VLAN information.

Optionally, the step of the OLT determining the ONT on which a loopback link occurs according to the position of the source ONT and the source port information, as well as the position of the destination ONT and the destination port information includes: determining that the loopback link occurs between the source ONT and the destination ONT when the position of the source ONT fails to coincide with the position of the destination ONT.

Optionally, the step of the OLT closing the service corresponding to the VLAN information in the source ONT or the destination ONT of the loopback link includes: selecting an ONT with a lower priority in the source ONT and the destination ONT according to preset priorities of the ONTs and closing a service corresponding to the VLAN information in the source port when the ONT with a lower priority is the source ONT, otherwise, closing the service corresponding to the VLAN information in the destination port.

Optionally, the method further includes closing all the services in the ports when it is determined that the number of services closed in the ports of an ONT is greater than the preset threshold.

Provided is a device for an OLT detecting a loopback link, applied to a passive optical access system including an OLT and a plurality of ONTs connected to the OLT, the device including a sending module, an acquiring module and a determining module. The sending module is arranged to send a loopback detection instruction to an ONT requiring to be detected by the OLT. The acquiring module is arranged to acquire a loopback detection message returned by the ONT according to the loopback detection instruction, wherein the loopback detection message includes the position of an ONT issuing the loopback detection message, that is, a source ONT, and port information of a port issuing the loopback detection message, as well as the position of an ONT receiving the loopback detection message, that is, a destination ONT, and port information of a port receiving the loopback detection message. The determining module is arranged to determine an ONT on which a loopback link occurs according to the position of the source ONT and the port information of the port issuing the loopback detection message, as well as the position of the destination ONT and the port information of the port receiving the loopback detection message.

Optionally, the determining module includes a first determining module arranged to determine that the loopback link occurs on the source ONT or the destination ONT when the position of the source ONT coincides with the position of the destination ONT and the port issuing the loopback detection message fails to coincide with the port receiving the loopback detection message.

Optionally, the determining module includes a second determining module arranged to determine that the loopback link occurs on the source port of the source ONT when the position of the source ONT coincides with the position of the destination ONT and the port issuing the loopback detection message coincides with the port receiving the loopback detection message.

Optionally, the determining module includes a third determining module arranged to determine that the loopback link occurs between the source ONT and the destination ONT when the position of the source ONT fails to coincide with the position of the destination ONT.

Provided is an OLT including any of the above devices for the OLT detecting a loopback link.

Provided is a method for an ONT detecting a loopback link, applied to a passive optical access system including a plurality of ONTs and an OLT connected to the plurality of ONTs, the method including that: an ONT acquires a loopback detection instruction sent by the OLT, and then sends a loopback detection message to the OLT, wherein the loopback detection message includes the position of an ONT issuing the loopback detection message, that is, a source ONT, and information of a source port, the position of an ONT receiving the loopback detection message, that is, a destination ONT, and information of a destination port, as well as wireless VLAN information for identifying a service type of an ONT port; and closes a service corresponding to the VLAN information in the source ONT or the destination ONT on which a loopback link occurs according to a closing instruction after the OLT determines the ONT on which a loopback link occurs according to the position of the source ONT and the source port information, as well as the position of the destination ONT and the destination port information and issues the closing instruction.

Optionally, the step that the ONT acquires a loopback detection instruction sent by the OLT and then sends a loopback detection message to the OLT includes that: the ONT sends the loopback detection message to a user after acquiring the loopback detection instruction sent by the OLT, and adds the position of the source ONT issuing the loopback detection message and the information of the port issuing the loopback detection message, as well as the VLAN information for identifying the service type of the ONT port in the loopback detection message; and the ONT adds the position of the destination ONT receiving the loopback detection message and port information of the port receiving the loopback detection message in the received loopback detection message upon receipt of the loopback detection message in the period of enabling loopback detection, acquires the loopback detection message, and sends the loopback detection message to the OLT.

Provided is a device for an ONT detecting a loopback link, applied to a passive optical access system including a plurality of ONTs and an OLT connected to the plurality of ONTs, and the device includes a sending unit and a processing unit.

The sending unit is arranged to acquire a loopback detection instruction sent by the OLT, and then send a loopback detection message to the OLT, wherein the loopback detection message includes the position of an ONT issuing the loopback detection message, that is, a source ONT, and port information of a port issuing the loopback detection message, the position of an ONT receiving the loopback detection message, that is, a destination ONT, and port information of a port receiving the loopback detection message, as well as wireless VLAN information for identifying a service type of an ONT port.

The processing unit is arranged to close a service corresponding to the VLAN information in the source ONT or the destination ONT on which a loopback link occurs according to a closing instruction after the OLT determines the ONT on which a loopback link occurs according to the position of the source ONT and the port information of the port issuing the loopback detection message, as well as the position of the destination ONT and the port information of the port receiving the loopback detection message.

Optionally, the sending unit includes a first sending unit and a second sending unit. The first sending unit is arranged to send the loopback detection message to a user after acquiring the loopback detection instruction sent by the OLT, and add the position of the source ONT issuing the loopback detection message and the port information of the port issuing the loopback detection message, as well as the VLAN information for identifying the service type of the ONT port in the loopback detection message. The second sending unit is arranged to add the position of the destination ONT receiving the loopback detection message and port information of the port receiving the loopback detection message in the received loopback detection message upon receipt of the loopback detection message in the period of enabling loopback detection, acquire the loopback detection message, and send the loopback detection message to the OLT.

Provided is an ONT including any of the above devices for an ONT detecting a loopback link.

Provided is a computer program including program instructions which, when executed by a computer, cause the computer to execute any of the above methods for the OLT detecting a loopback link.

Provided is a carrier carrying the abovementioned computer program.

Provided is a computer program including program instructions which, when executed by a computer, cause the computer to execute any of the above methods for the ONT detecting a loopback link.

Provided is a carrier carrying the abovementioned computer program.

The embodiments of the disclosure have the following advantageous effects.

The method for an OLT detecting a loopback link in the embodiments of the disclosure precisely determines a port on which a loopback occurs according to the souce and destination ports on which a loopback link occurs in the loopback detection message sent by the ONT, and closes a service corresponding to VLAN information according to the priorities of the ONTs and the ONT ports, thereby reducing interruption of a user service and improving using experience of users with high priorities.

### BRIEF DESCRIPTION OF THE DRAWINGS

Fig. 1 is a flow diagram showing a method for an OLT detecting a loopback link according to an embodiment of the disclosure.
Fig. 2 is a schematic diagram illustrating a loopback link detection deployment according to an embodiment of the disclosure.

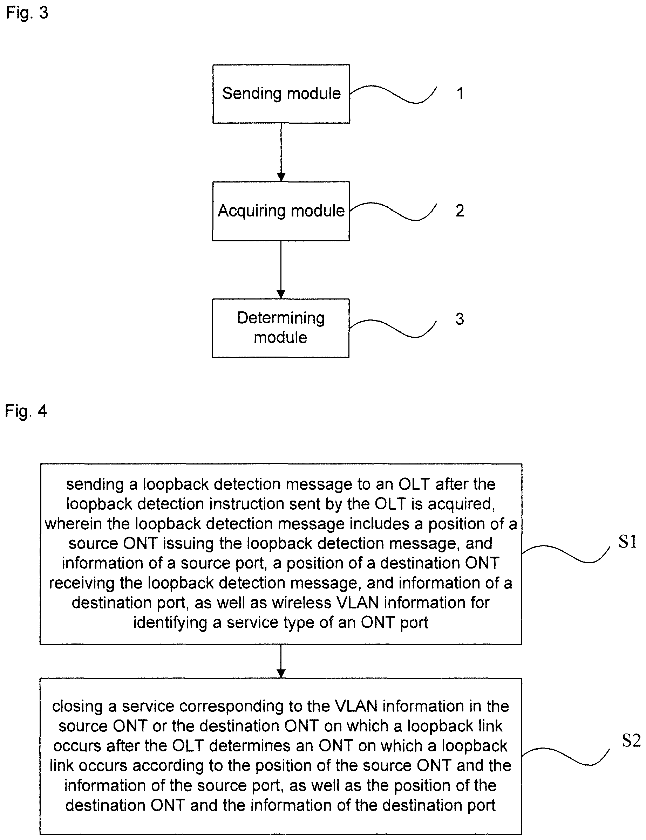

Fig. 3 is a block diagram illustrating a structure for an OLT detecting a loopback link according to an embodiment of the disclosure.
Fig. 4 is a flow diagram showing a method for an ONT detecting a loopback link according to an embodiment of the disclosure.

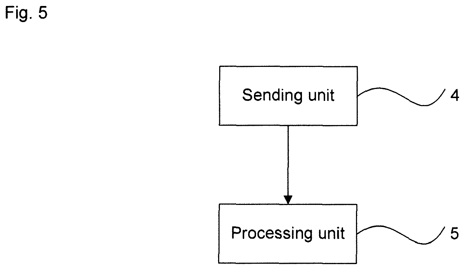

Fig. 5 is a block diagram illustrating a structure for an ONT detecting a loopback link according to an embodiment of the disclosure.

### DETAILED DESCRIPTION

Details will be described below with reference to specific embodiments and the accompanying drawings.

The embodiments of the disclosure provide a method and device for the OLT and the ONT detecting a loopback link, for solving the problem of the inability to precisely determine the ONT on which a loopback link occurs and thus to result in excessive interruption of a user service.

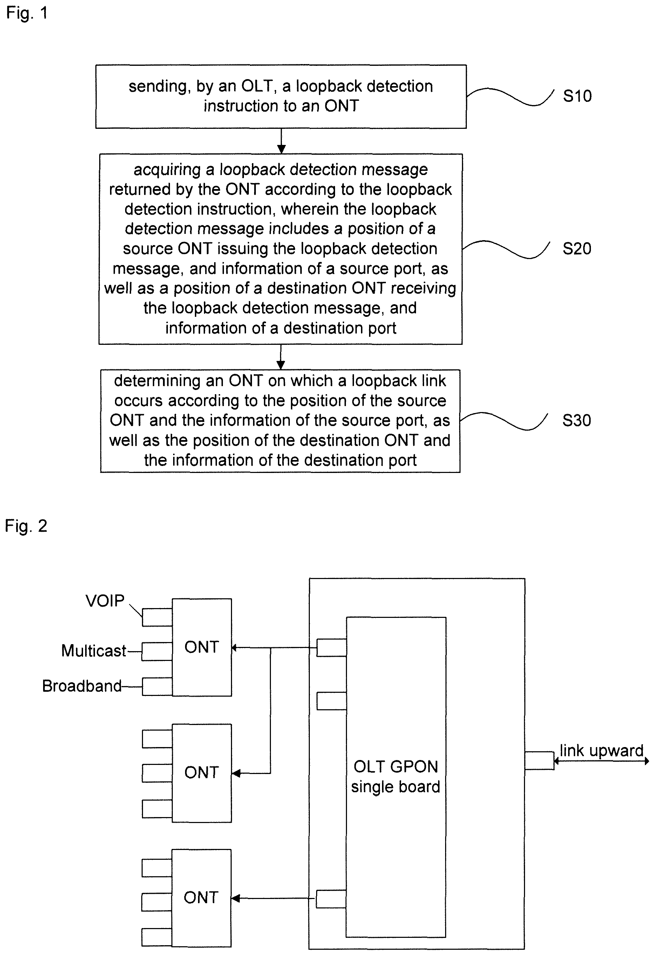

The method for an OLT detecting a loopback link in the embodiments of the disclosure is shown in Fig. 1, including the following steps.

At Step S10, the OLT sends a loopback detection instruction to an ONT.

In a specific embodiment of the disclosure, after the loopback detection function is enabled, the OLT enters the message detection state. If it is detected that there is an ONT requiring loopback detection, the loopback detection instruction is sent through a management channel to notify the corresponding ONT of loopback detection.

At Step S20, the OLT acquires a loopback detection message returned by the ONT according to the loopback detection instruction, wherein the loopback detection message includes a position of a source ONT issuing the loopback detection message, and information of a source port, as well as a position of a destination ONT receiving the loopback detection message, and information of a destination port.

In a specific embodiment of the disclosure, after receiving the loopback detection message sent by the ONT, the OLT first determines whether it is the loopback detection message issued by the ONT. If not, it is discarded. Moreover, the loopback detection message also includes VLAN information for identifying a service type of an ONT port. The destination MAC address of the loopback detection message is the loopback detection address.

The embodiment of the disclosure accurately detects the ONT port on which a loopback occurs according to the position of the source ONT and information of the source port, as well as the position of the destination ONT and information of the destination port in the loopback detection message, and closes a service corresponding to VLAN information in the ONT ports according to the priorities of the ONTs and the priority of the ONT ports, thereby avoiding excessive interruption of a user service and improving using experience of users with high priorities.

Herein, the OLT sends an instruction to an ONT which is supposed to issue a loopback detection message. In the case of no loopback, the ONT will only issue the detection message and should not receive any detection message. As long as the ONT receives the detection message, it means that there is certainly a loopback. It is necessary to add the position information of the ONT receiving the detection message and the port information of the port receiving the detection message in the received detection message. In addition, when issuing a detection message, the ONT also adds the position of the ONT issuing the message and the port information of the port issuing the message in the message.

At Step S30, the OLT determines the ONT on which a loopback link occurs according to the position of the source ONT and the source port information, as well as the position of the destination ONT and the destination port information.

In a specific embodiment of the disclosure, after receiving the loopback detection message sent by the ONT, the OLT identifies the port information in the loopback detection message, that is, the position of the source ONT and the source port information, as well as the position of the destination ONT and the destination port information, and then determines the ONT on which a loopback link occurs.

Optionally, after determining the ONT on which a loopback link occurs, the service corresponding to the VLAN information in the source ONT or the destination ONT of the loopback link is closed. The details are as follows.

### Embodiment One

The first determining module determines that the loopback link occurs on the source ONT or the destination ONT when the position of the source ONT coincides with the position of the destination ONT and the source port fails to coincide with the destination port. At this time, an ONT port with a lower priority in the source port and the destination port is selected according to preset priorities of the ONT ports, and a service corresponding to the VLAN information in the ONT port with a lower priority is closed. When the priority of the source port is the same as the priority of the destination port, the service corresponding to the VLAN information in the port with a smaller port number is closed.

### Embodiment Two

The second determining module determines that the loopback link occurs on the source port of the source ONT when the position of the source ONT coincides with the position of the destination ONT and the source port coincides with the destination port. At this time, the service with a lower priority in the source port is closed, wherein the service is a service corresponding to the VLAN information.

### Embodiment Three

It is determined that the loopback link occurs between the source ONT and the destination ONT when the position of the source ONT fails to coincide with the position of the destination ONT. At this time, an ONT with a lower priority in the source ONT and the destination ONT is selected according to preset priorities of the ONTs. A service corresponding to the VLAN information in the source port is closed when the ONT with a lower priority is the source ONT, and otherwise, the service corresponding to the VLAN information in the destination port is closed.

In a specific embodiment of the disclosure, the priorities of services of the ONT ports and the priorities of the ONT ports are set in advance. As shown in Fig. 2, the ONT ports carry services such as Voice of Internet Phone (VoIP), multicast, and broadband. Generally, the priorities of the services are determined according to the order of voice, VoIP, multicast, and broadband. Alternatively, in the FTTB scenario, the priority may be directly determined according to the port of the ONT. The higher the user's level is, the higher the priority of the port connecting the user is.

In addition, in the specific embodiment of the disclosure, after the loopback detection function is enabled, the OLT creates a loopback detection list, and records the service closed by each ONT and the port information of each ONT. All the services in the ports are closed when it is determined that the number of services closed in the ONT ports is greater than the preset threshold, improving the convergence speed of the loopback detection.

The method for an OLT detecting a loopback link in the embodiments of the disclosure precisely determines a port on which a loopback occurs according to the source end and the destination end of a loopback link in the loopback detection message sent by the ONT, and closes a service corresponding to VLAN information according to the priorities of the ONTs and the ONT ports, thereby reducing interruption of a user service.

The embodiments of the disclosure also provide a device for an OLT detecting a loopback link, applied to a passive optical access system including an OLT and a plurality of ONTs connected to the OLT, the device including:
a sending module 1 arranged to send a loopback detection instruction to an ONT by the OLT;
an acquiring module 2 arranged to acquire a loopback detection message returned by the ONT according to the loopback detection instruction, wherein the loopback detection message includes a position of a source ONT issuing the loopback detection message, and information of a source port, as well as a position of a destination ONT receiving the loopback detection message, and information of a destination port; and
a determining module 3 arranged to determine the ONT on which a loopback link occurs according to the position of the source ONT and the source port information, as well as the position of the destination ONT and the destination port information.

In the device for the OLT detecting a loopback link in the embodiments of the disclosure, the loopback detection message further includes the VLAN information for identifying a service type of an ONT port.

The device for an OLT detecting a loopback link in the embodiments of the disclosure further includes a processing module, arranged to close a service corresponding to the VLAN information in the source ONT or the destination ONT of the loopback link after determining the ONT on which a loopback link occurs according to the position of the source ONT and the source port information, as well as the position of the destination ONT and the destination port information.

In the device for an OLT detecting a loopback link in the embodiments of the disclosure, the determining module includes a first determining module arranged to determine that the loopback link occurs on the source ONT or the destination ONT when the position of the source ONT coincides with the position of the destination ONT and the source port fails to coincide with the destination port.

In the device for an OLT detecting a loopback link in the embodiments of the disclosure, the processing module includes a first selecting module arranged to select an ONT port with a lower priority in the source port and the destination port according to preset priorities of ONT ports and a first closing module arranged to close a service corresponding to the VLAN information in the ONT port with a lower priority.

In the device for an OLT detecting a loopback link in the embodiments of the disclosure, the determining module includes a second determining module arranged to determine that the loopback link occurs on the source port of the source ONT when the position of the source ONT coincides with the position of the destination ONT and the source port coincides with the destination port.

In the device for an OLT detecting a loopback link in the embodiments of the disclosure, the processing module includes a second closing module arranged to close the service with a lower priority in the source port, wherein the service is a service corresponding to the VLAN information.

The device for an OLT detecting a loopback link in the embodiments of the disclosure further includes a setting module arranged to set the priority of the services of the ONT ports before the OLT sends a loopback detection instruction to the ONT.

In the device for an OLT detecting a loopback link in the embodiments of the disclosure, the determining module further includes a third determining module arranged to determine that the loopback link occurs between the source ONT and the destination ONT when the position of the source ONT fails to coincide with the position of the destination ONT.

In the device for an OLT detecting a loopback link in the embodiments of the disclosure, the processing module further includes a second selecting module arranged to select an ONT with a lower priority in the source ONT and the destination ONT according to preset priorities of ONTs and a third closing module arranged to close a service corresponding to the VLAN information in the source port when the ONT with a lower priority is the source ONT and otherwise, close the service corresponding to the VLAN information in the destination port.

The device for an OLT detecting a loopback link in the embodiments of the disclosure further includes a fourth processing module arranged to close all the services in the ports when it is determined that the number of services closed in the ONT ports is greater than the preset threshold.

The embodiments of the disclosure also provide an OLT including the device for the OLT detecting a loopback link as described above.

The embodiments of the disclosure also provide a method for an ONT detecting a loopback link, applied to a passive optical access system including a plurality of ONTs and an OLT connected to the plurality of ONTs and the method includes the following steps.

At Step S1, the loopback detection message is sent to the OLT after acquiring the loopback detection instruction sent by the OLT, wherein the loopback detection message includes a position of a source ONT issuing the loopback detection message, and information of a source port, a position of a destination ONT receiving the loopback detection message, and information of a destination port, as well as wireless VLAN information for identifying a service type of an ONT port.

At Step S2, the service corresponding to the VLAN information in the source ONT or the destination ONT on which a loopback link occurs is closed after the OLT determines the ONT on which a loopback link occurs according to the position of the source ONT and the source port information, as well as the position of the destination ONT and the destination port information.

In the method for an ONT detecting a loopback link in the embodiments of the disclosure, the step of sending a loopback detection message to the OLT after acquiring the loopback detection instruction sent by the OLT includes:
sending a first loopback detection message to a user after acquiring the loopback detection instruction sent by the OLT, and adding the position of the source ONT issuing the loopback detection message and the source port information, as well as the VLAN information for identifying the service type of the ONT port in the first loopback detection message; and
adding the position of the destination ONT receiving the loopback detection message and information of the destination port in the loopback detection message after receiving the loopback detection message fed back by the user according to the first loopback detection message, and sending the loopback detection message to the OLT.

The embodiments of the disclosure also provide a device for an ONT detecting a loopback link, applied to a passive optical access system including a plurality of ONTs and an OLT connected to the plurality of ONTs, and the device includes:
a sending unit 4 arranged to send a loopback detection message to the OLT after acquiring the loopback detection instruction sent by the OLT, wherein the loopback detection message includes the position of the source ONT issuing the loopback detection message, and information of the source port, the position of the destination ONT receiving the loopback detection message, and information of the destination port, as well as wireless VLAN information for identifying the service type of the ONT port; and
a processing unit 5 arranged to close a service corresponding to the VLAN information in the source ONT or the destination ONT on which a loopback link occurs after the OLT determines the ONT on which a loopback link occurs according to the position of the source ONT and the source port information, as well as the position of the destination ONT and the destination port information.

In the device for an ONT detecting a loopback link in the embodiments of the disclosure, the sending unit includes:
a first sending unit arranged to send a first loopback detection message to a user after acquiring the loopback detection instruction sent by the OLT, and add the position of the source ONT issuing the loopback detection message and the source port information, as well as the VLAN information for identifying the service type of the ONT port in the first loopback detection message; and
a second sending unit arranged to add the position of the destination ONT receiving the loopback detection message and information of the destination port in the loopback detection message when receiving the loopback detection message fed back according to the loopback detection message, and send the loopback detection message to the OLT.

The embodiments of the disclosure also provide an ONT including the device for the ONT detecting a loopback link as described above.

The embodiments of the disclosure disclose a method for an OLT detecting a loopback link, applied to a passive optical access system including an OLT and a plurality of ONTs connected to the OLT, the method including that:
the OLT sends a loopback detection instruction to an ONT requiring to be detected;
the OLT acquires a loopback detection message returned by the ONT according to the loopback detection instruction, wherein the loopback detection message includes a position of an ONT issuing the loopback detection message, that is, a source ONT, and port information of a port issuing the loopback detection message, as well as a position of an ONT receiving the loopback detection message, that is, a destination ONT, and port information of a port receiving the loopback detection message; and
the OLT determines the ONT on which a loopback link occurs according to the position of the source ONT and the source port information, as well as the position of the destination ONT and the port information of the port receiving the loopback detection message.

Optionally, the loopback detection message further includes: VLAN information for identifying a service type of an ONT port.

Optionally, after the step of determining the ONT on which a loopback link occurs according to the position of the source ONT and the port information of the port issuing the loopback detection message, as well as the position of the destination ONT and the port information of the port receiving the loopback detection message, the method further includes that the OLT closes a service corresponding to the VLAN information in the source ONT or the destination ONT of the loopback link.

Optionally, the step of the OLT determining the ONT on which a loopback link occurs according to the position of the source ONT and the port information of the port issuing the loopback detection message, as well as the position of the destination ONT and the port information of the port receiving the loopback detection message includes:
determining that the loopback link occurs on the source ONT or the destination ONT when the position of the source ONT coincides with the position of the destination ONT and the port issuing the loopback detection message fails to coincide with the port receiving the loopback detection message.

Optionally, the step of the OLT closing the service corresponding to the VLAN information in the source ONT or the destination ONT of the loopback link includes:
selecting an ONT port with a lower priority in the source port and the destination port according to preset priorities of ONT ports; and
closing the service corresponding to the VLAN information in the ONT port with a lower priority.

Optionally, prior to the step of the OLT sending a loopback detection instruction to the plurality of ONTs, the method further includes:
setting priorities of the port services of the plurality of ONTs.

Optionally, the step of the OLT determining the ONT on which a loopback link occurs according to the position of the source ONT and the port information of the port issuing the loopback detection message, as well as the position of the destination ONT and the port information of the port receiving the loopback detection message includes:
determining that the loopback link occurs on the source port of the source ONT when the position of the source ONT coincides with the position of the destination ONT and the port issuing the loopback detection message coincides with the port receiving the loopback detection message.

Optionally, the step of the OLT closing the service corresponding to the VLAN information in the source ONT or the destination ONT of the loopback link includes:
closing a service with a lower priority in the source port, wherein the service is a service corresponding to the VLAN information.

Optionally, the step of the OLT determining the ONT on which a loopback link occurs according to the position of the source ONT and the source port information, as well as the position of the destination ONT and the destination port information includes:
determining that the loopback link occurs between the source ONT and the destination ONT when the position of the source ONT fails to coincide with the position of the destination ONT.

Optionally, the step of the OLT closing the service corresponding to the VLAN information in the source ONT or the destination ONT of the loopback link includes:
selecting an ONT with a lower priority in the source ONT and the destination ONT according to preset priorities of the ONTs; and
closing a service corresponding to the VLAN information in the source port when the ONT with a lower priority is the source ONT, otherwise, closing the service corresponding to the VLAN information in the destination port.

Optionally, the method further includes:
closing all the services in the ports when it is determined that the number of services closed in the ports of an ONT is greater than the preset threshold.

The embodiments of the disclosure disclose a device for an OLT detecting a loopback link, applied to a passive optical access system including an OLT and a plurality of ONTs connected to the OLT and the device includes a sending module, an acquiring module and a determining module.

The sending module is arranged to send a loopback detection instruction to an ONT requiring to be detected by the OLT.

The acquiring module is arranged to acquire a loopback detection message returned by the ONT according to the loopback detection instruction, wherein the loopback detection message includes the position of an ONT issuing the loopback detection message, that is, a source ONT, and port information of a port issuing the loopback detection message, as well as the position of an ONT receiving the loopback detection message, that is, a destination ONT, and port information of a port receiving the loopback detection message.

The determining module is arranged to determine an ONT on which a loopback link occurs according to the position of the source ONT and the port information of the port issuing the loopback detection message, as well as the position of the destination ONT and the port information of the port receiving the loopback detection message.

Optionally, the determining module includes a first determining module arranged to determine that the loopback link occurs on the source ONT or the destination ONT when the position of the source ONT coincides with the position of the destination ONT and the port issuing the loopback detection message fails to coincide with the port receiving the loopback detection message.

Optionally, the determining module includes a second determining module arranged to determine that the loopback link occurs on the source port of the source ONT when the position of the source ONT coincides with the position of the destination ONT and the port issuing the loopback detection message coincides with the port receiving the loopback detection message.

Optionally, the determining module includes a third determining module arranged to determine that the loopback link occurs between the source ONT and the destination ONT when the position of the source ONT fails to coincide with the position of the destination ONT.

The embodiments of the disclosure disclose an OLT including any of the above devices for the OLT detecting a loopback link.

The embodiments of the disclosure disclose a method for an ONT detecting a loopback link, applied to a passive optical access system including a plurality of ONTs and an OLT connected to the plurality of ONTs, the method including that:
an ONT acquires a loopback detection instruction sent by the OLT, and then sends a loopback detection message to the OLT, wherein the loopback detection message includes the position of an ONT issuing the loopback detection message, that is, a source ONT, and information of a source port, the position of an ONT receiving the loopback detection message, that is, a destination ONT, and information of a destination port, as well as wireless VLAN information for identifying the ONT port service type; and closes a service corresponding to the VLAN information in the source ONT or the destination ONT on which a loopback link occurs according to a closing instruction after the OLT determines the ONT on which a loopback link occurs according to the position of the source ONT and the source port information, as well as the position of the destination ONT and the destination port information and issues the closing instruction.

Optionally, the step of the ONT acquiring a loopback detection instruction sent by the OLT and then sending a loopback detection message to the OLT includes that:
the ONT sends the loopback detection message to a user after acquiring the loopback detection instruction sent by the OLT, and adds the position of the source ONT issuing the loopback detection message and the information of the port issuing the loopback detection message, as well as the VLAN information for identifying the ONT port service type in the loopback detection message; and
the ONT adds the position of the destination ONT receiving the loopback detection message and port information of the port receiving the loopback detection message in the received loopback detection message as long as receiving the loopback detection message in the period of enabling loopback detection, acquires the loopback detection message, and sends the loopback detection message to the OLT.

The embodiments of the disclosure disclose a device for an ONT detecting a loopback link, applied to a passive optical access system including a plurality of ONTs and an OLT connected to the plurality of ONTs and the device includes a sending unit and a processing unit.

The sending unit is arranged to acquire a loopback detection instruction sent by the OLT, and then send a loopback detection message to the OLT, wherein the loopback detection message includes the position of an ONT issuing the loopback detection message, that is, a source ONT, and port information of a port issuing the loopback detection message, the position of an ONT receiving the loopback detection message, that is, a destination ONT, and port information of a port receiving the loopback detection message, as well as wireless VLAN information for identifying the ONT port service type.

The processing unit is arranged to close a service corresponding to the VLAN information in the source ONT or the destination ONT on which a loopback link occurs according to a closing instruction after the OLT determines the ONT on which a loopback link occurs according to the position of the source ONT and the port information of the port issuing the loopback detection message, as well as the position of the destination ONT and the port information of the port receiving the loopback detection message.

Optionally, the sending unit includes a first sending unit and a second sending unit.

The first sending unit is arranged to send the loopback detection message to a user after acquiring the loopback detection instruction sent by the OLT, and add the position of the source ONT issuing the loopback detection message and the port information of the port issuing the loopback detection message, as well as the VLAN information for identifying the ONT port service type in the loopback detection message.

The second sending unit is arranged to add the position of the destination ONT receiving the loopback detection message and port information of the port receiving the loopback detection message in the received loopback detection message as long as receiving the loopback detection message in the period of enabling loopback detection, acquire the loopback detection message, and send the loopback detection message to the OLT.

The embodiments of the disclosure disclose an ONT including any of the above devices for an ONT detecting a loopback link.

The embodiments of the disclosure disclose a computer program including program instructions which, when executed by a computer, cause the computer to execute any of the above methods for the OLT detecting a loopback link. The embodiments of the disclosure disclose a carrier carrying the computer program.

The embodiments of the disclosure disclose a computer program including program instructions which, when executed by a computer, cause the computer to execute any of the above methods for the ONT detecting a loopback link. The embodiments of the disclosure disclose a carrier carrying the computer program.

It is to be noted that the terminal and the device are the terminal and the device corresponding to the above method embodiments, and that all the implementations of the above method embodiments are applicable to the embodiments of the terminal and the device, and the same technical effect may also be achieved.

By means of the cooperation between OLT and ONT, the embodiments of the disclosure realize the precise detection of the loopback link based on the ONT port(s) and the VLAN information, and closes a service corresponding to VLAN information according to the priorities of the ONT ports, thereby ensuring using experience of users with high priorities.

The foregoing is intended only as a preferred embodiment of the disclosure and is not intended to limit the disclosure, and any modifications, equivalent substitutions, improvements, and the like within the spirit and principles of the disclosure are to be included within the scope of protection of the disclosure.

### INDUSTRIAL APPLICABILITY

The method for an OLT detecting a loopback link in the embodiments of the disclosure precisely determines a port on which a loopback occurs according to the source and destination ends of a loopback link in the loopback detection message sent by the ONT, and closes a service corresponding to VLAN information according to the priorities of the ONTs and the ONT ports, thereby reducing interruption of a user service and improving using experience of users with high priorities. The disclosure therefore has a great industrial applicability.

## Claims

1. A method for an Optical Line Terminal, OLT, detecting a loopback link, applied to a passive optical access system comprising an OLT and a plurality of Optical Network Terminals, ONTs, connected to the OLT, the method comprising:
sending, by the OLT, a loopback detection instruction to an ONT requiring to be detected;
acquiring, by the OLT, a loopback detection message returned by the ONT according to the loopback detection instruction, wherein the loopback detection message comprises a position of an ONT issuing the loopback detection message, that is, a source ONT, and port information of a port issuing the loopback detection message, as well as a position of an ONT receiving the loopback detection message, that is, a destination ONT, and port information of a port receiving the loopback detection message; and
determining, by the OLT, an ONT on which a loopback link occurs according to the position of the source ONT and the source port information, as well as the position of the destination ONT and the port information of the port receiving the loopback detection message.

2. The method for an OLT detecting a loopback link according to claim 1, wherein the loopback detection message further comprises: Virtual Local Area Network, VLAN, information for identifying a service type of an ONT port.

3. The method for an OLT detecting a loopback link according to claim 2, after the step of determining the ONT on which a loopback link occurs according to the position of the source ONT and the port information of the port issuing the loopback detection message, as well as the position of the destination ONT and the port information of the port receiving the loopback detection message, the method further comprises:
closing, by the OLT, a service corresponding to the VLAN information in the source ONT or the destination ONT of the loopback link.

4. The method for an OLT detecting a loopback link according to claim 3, wherein the step of determining, by the OLT, the ONT on which a loopback link occurs according to the position of the source ONT and the port information of the port issuing the loopback detection message, as well as the position of the destination ONT and the port information of the port receiving the loopback detection message comprises:
determining that the loopback link occurs on the source ONT or the destination ONT when the position of the source ONT coincides with the position of the destination ONT and the port issuing the loopback detection message fails to coincide with the port receiving the loopback detection message.

5. The method for an OLT detecting a loopback link according to claim 4, wherein the step of closing, by the OLT, the service corresponding to the VLAN information in the source ONT or the destination ONT of the loopback link comprises:
selecting an ONT port with a lower priority in the source port and the destination port according to preset priorities of ONT ports; and
closing the service corresponding to the VLAN information in the ONT port with a lower priority.

6. The method for an OLT detecting a loopback link according to claim 3, wherein prior to the step of sending, by the OLT, a loopback detection instruction to the plurality of ONTs, the method further comprises:
setting priorities of services in ports of the plurality of ONTs.

7. The method for an OLT detecting a loopback link according to claim 6, wherein the step of determining, by the OLT, the ONT on which a loopback link occurs according to the position of the source ONT and the port information of the port issuing the loopback detection message, as well as the position of the destination ONT and the port information of the port receiving the loopback detection message comprises:
determining that the loopback link occurs on the source port of the source ONT when the position of the source ONT coincides with the position of the destination ONT and the port issuing the loopback detection message coincides with the port receiving the loopback detection message.

8. The method for an OLT detecting a loopback link according to claim 7, wherein the step of closing, by the OLT, the service corresponding to the VLAN information in the source ONT or the destination ONT of the loopback link comprises:
closing the service with a lower priority in the source port, wherein the service is a service corresponding to the VLAN information.

9. The method for an OLT detecting a loopback link according to claim 3, wherein the step of determining, by the OLT, the ONT on which a loopback link occurs according to the position of the source ONT and the source port information, as well as the position of the destination ONT and the destination port information comprises:
determining that the loopback link occurs between the source ONT and the destination ONT when the position of the source ONT fails to coincide with the position of the destination ONT.

10. The method for an OLT detecting a loopback link according to claim 9, wherein the step of closing, by the OLT, the service corresponding to the VLAN information in the source ONT or the destination ONT of the loopback link comprises:
selecting an ONT with a lower priority in the source ONT and the destination ONT according to preset priorities of the ONTs; and
closing the service corresponding to the VLAN information in the source port when the ONT with a lower priority is the source ONT, otherwise, closing the service corresponding to the VLAN information in the destination port.

11. The method for an OLT detecting a loopback link according to claim 5, 8 or 10, further comprising:
closing all services in an ONT port when it is judged that the number of services closed by the ONT port is greater than a preset threshold.

12. A device for an Optical Line Terminal, OLT, detecting a loopback link, applied to a passive optical access system comprising an OLT and a plurality of Optical Network Terminals, ONTs, connected to the OLT, the device comprising a sending module, an acquiring module and a determining module, wherein
the sending module is arranged to send a loopback detection instruction to an ONT requiring to be detected by the OLT;
the acquiring module is arranged to acquire a loopback detection message returned by the ONT according to the loopback detection instruction, wherein the loopback detection message comprises a position of an ONT issuing the loopback detection message, that is, a source ONT, and port information of a port issuing the loopback detection message, as well as a position of an ONT receiving the loopback detection message, that is, a destination ONT, and port information of a port receiving the loopback detection message; and
the determining module is arranged to determine an ONT on which a loopback link occurs according to the position of the source ONT and the port information of the port issuing the loopback detection message, as well as the position of the destination ONT and the port information of the port receiving the loopback detection message.

13. The device for an OLT detecting a loopback link according to claim 12, wherein the determining module comprises a first determining module, wherein
the first determining module is arranged to determine that the loopback link occurs on the source ONT or the destination ONT when the position of the source ONT coincides with the position of the destination ONT and the port issuing the loopback detection message fails to coincide with the port receiving the loopback detection message.

14. The device for an OLT detecting a loopback link according to claim 12, wherein the determining module comprises a second determining module, wherein
the second determining module is arranged to determine that the loopback link occurs on the source port of the source ONT when the position of the source ONT coincides with the position of the destination ONT and the port issuing the loopback detection message coincides with the port receiving the loopback detection message.

15. The device for an OLT detecting a loopback link according to claim 12, wherein the determining module comprises a third determining module, wherein
the third determining module is arranged to determine that the loopback link occurs between the source ONT and the destination ONT when the position of the source ONT fails to coincide with the position of the destination ONT.

16. An Optical Line Terminal, OLT, comprising the device for an OLT detecting a loopback link according to any one of claims 12 to 15.

17. A method for an Optical Network Terminal, ONT, detecting a loopback link, applied to a passive optical access system comprising a plurality of ONTs and an Optical Line Terminal, OLT, connected to the plurality of ONTs, the method comprising:
acquiring, by one ONT of the plurality of ONTs, a loopback detection instruction sent by the OLT, and then sending a loopback detection message to the OLT, wherein the loopback detection message comprises a position of an ONT issuing the loopback detection message, that is, a source ONT, and information of a source port, a position of an ONT receiving the loopback detection message, that is, a destination ONT, and information of a destination port, as well as wireless Virtual Local Area Network, VLAN, information for identifying a service type of an ONT port; and
closing a service corresponding to the VLAN information in the source ONT or the destination ONT on which a loopback link occurs according to a closing instruction after the OLT determines the ONT on which a loopback link occurs according to the position of the source ONT and the source port information, as well as the position of the destination ONT and the destination port information and issues the closing instruction.

18. The method for an ONT detecting a loopback link according to claim 17, wherein the step of acquiring, by the one ONT of the plurality of ONTs, a loopback detection instruction sent by the OLT and then sending a loopback detection message to the OLT comprises:
sending, by the ONT, the loopback detection message to a user after acquiring the loopback detection instruction sent by the OLT, and adding the position of the source ONT issuing the loopback detection message and the information of the port issuing the loopback detection message, as well as the VLAN information for identifying the service type of the ONT port in the loopback detection message; and
adding, by the ONT, the position of the destination ONT receiving the loopback detection message and the port information of the port receiving the loopback detection message in the received loopback detection message upon receipt of the loopback detection message in the period of enabling a loopback check, acquiring the loopback detection message, and sending the loopback detection message to the OLT.

19. A device for an Optical Network Terminal, ONT, detecting a loopback link, applied to a passive optical access system comprising a plurality of ONTs and an Optical Line Terminal, OLT, connected to the plurality of ONTs, the device comprising a sending unit and a processing unit, wherein
the sending unit is arranged to acquire a loopback detection instruction sent by the OLT, and then send a loopback detection message to the OLT, wherein the loopback detection message comprises a position of an ONT issuing the loopback detection message, that is, a source ONT, and port information of a port issuing the loopback detection message, a position of a ONT receiving the loopback detection message, that is, a destination ONT, and port information of a port receiving the loopback detection message, as well as wireless Virtual Local Area Network, VLAN, information for identifying a service type of an ONT port; and
the processing unit is arranged to close a service corresponding to the VLAN information in the source ONT or the destination ONT on which a loopback link occurs according to a closing instruction after the OLT determines the ONT on which a loopback link occurs according to the position of the source ONT and the port information of the port issuing the loopback detection message, as well as the position of the destination ONT and the port information of the port receiving the loopback detection message.

20. The device for an ONT detecting a loopback link according to claim 19, wherein the sending unit comprises a first sending unit and a second sending unit, wherein
the first sending unit is arranged to send the loopback detection message to a user after acquiring the loopback detection instruction sent by the OLT, and add the position of the source ONT issuing the loopback detection message and the port information of the port issuing the loopback detection message, as well as the VLAN information for identifying the service type of the ONT port in the loopback detection message; and
the second sending unit is arranged to add the position of the destination ONT receiving the loopback detection message and the port information of the port receiving the loopback detection message in the received loopback detection message upon receipt of the loopback detection message in the period of enabling a loopback check, acquire the loopback detection message, and send the loopback detection message to the OLT.

21. An Optical Network Terminal, ONT, comprising the device for an ONT detecting a loopback link according to any one of claims 19 to 20.

22. A computer program comprising program instructions which, when executed by a computer, cause the computer to execute the method for the Optical Line Terminal, OLT, detecting a loopback link according to any one of claims 1 to 11.

23. A carrier carrying the computer program according to claim 22.

24. A computer program comprising program instructions which, when executed by a computer, cause the computer to execute the method for the Optical Network Terminal, ONT, detecting a loopback link according to any one of claims 17 to 18.

25. A carrier carrying the computer program according to claim 24.
